**Europäisches Patentamt**

**(19)** **European Patent Office**

**Office européen des brevets**

**(11)** Publication number : **0 329 205 B1**

**(12)** # EUROPEAN PATENT SPECIFICATION

**(45)** Date of publication of patent specification : **08.04.92 Bulletin 92/15**

**(51)** Int. Cl.$^5$ : **F16H 59/06, F16H 55/56**

**(21)** Application number : **89200043.1**

**(22)** Date of filing : **10.01.89**

**(54)** Infinitely variable transmission.

**(30)** Priority : **10.02.88 NL 8800315**

**(43)** Date of publication of application : **23.08.89 Bulletin 89/34**

**(45)** Publication of the grant of the patent : **08.04.92 Bulletin 92/15**

**(84)** Designated Contracting States : **DE FR GB IT NL**

**(56)** References cited :
EP-A- 0 128 611
CH-A- 469 920
DE-A- 2 118 083
FR-A- 2 330 920

**(73)** Proprietor : **Van Doorne's Transmissie B.V. Dr. Hub van Doorneweg 120 Postbus 500 NL-5026 RA Tilburg (NL)**

**(72)** Inventor : **Van Beek, Coenraad Huig Acacialaan 15 NL-5087 KL Diessen (NL)**

**(74)** Representative : **Timmermans, Anthonius C.Th., Ir. et al European Patent Attorneys Octrooibureau Zuid P.O. Box 2287 NL-5600 CG Eindhoven (NL)**

EP 0 329 205 B1

## Description

The invention relates to an infinitely variable transmission as defined in the first part of the sole claim and known from FR-A 2 330 920.

Another infinitely variable transmission is e.g. known from a German Offenlegungsschrift 2118083. The limitation of a filling hole used there is that, in order to be able to ensure that there is constantly sufficient pressure in the cylinder space, the filling hole cannot be too large because otherwise, especially at higher pressures, too much fluid will flow away via the filling hole in the compensation chamber. If the hole is too small on the other hand the filling hole becomes clogged easily, so that the action of the compensation chamber is limited or lost entirely. The purpose of the invention is to further develop the known infinitely variable transmission.

According to the invention the infinitely variable transmission is defined as outlined in the sole claim.

Such calibrated openings can be adjusted such that under all circumstances a sufficient supply of fluid, a leakage flow, towards the pressure compensation chamber is ensured. Small impurities can pass the calibrated openings and will eventually end up, via the pressure compensation chamber, in a sump of the transmission, from where the impurities are stopped by a filter and can no longer be circulated in the system. The larger impurities, which are especially produced when the transmission is running in, usually cannot pass the calibrated openings but cannot clog the calibrated openings either because of the continuous relative movement of the piston and cylinder, so that the calibrated openings are constantly scraped clean. The life of the transmission is considerably extended as a result, whilst interim cleaning of the calibrated openings is not necessary.

According to the invention the calibrated openings are determined by a sealing ring provided between the piston and the wall of the cylinder. The sealing ring may e.g. be a rectangular sealing ring, such as a piston ring. The sealing ring openings thereby ensure that on the one hand the pressure in the cylinder space is always sufficiently large whilst on the other hand a sufficient leakage flow towards the compensation chamber is ensured. Said sealing ring having a dual function forms a simple and at the same time inexpensive construction for the filling hole.

The invention wild now be further explained with reference to an embodiment and drawings:

fig 1 shows a pulley of an infinitely variable transmission according to the state of the art, with a filling hole between a cylinder and a compensation chamber, said filling hole being provided with a filter;

fig 2 shows a pulley of an infinitely variable transmission according to the invention, with calibrated openings between the cylinder wall and the piston;

fig 3 is a section according to the line A - A in fig. 2.

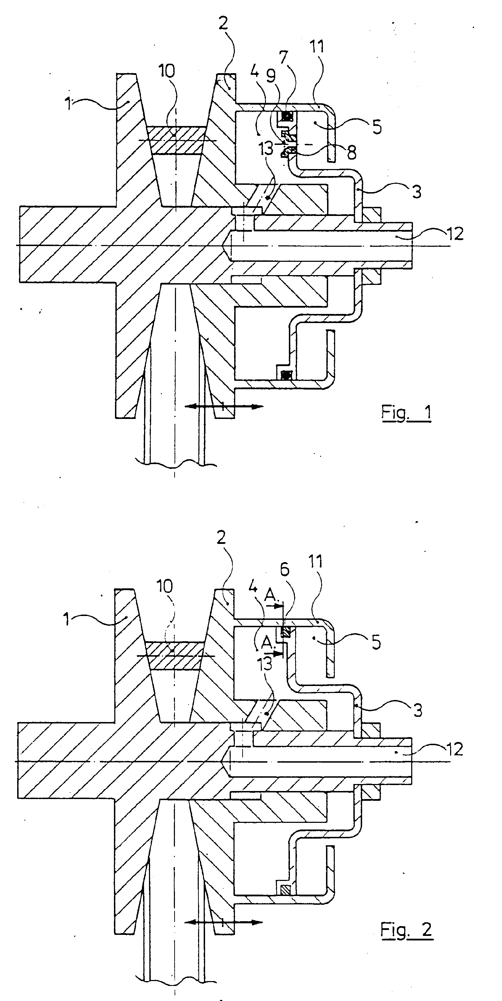

On a combined disc-shaft 1 of a V-shaped pulley according to fig 1 there is mounted an axially movable, yet rotatable, disc (pulley-half) 2. The disc 2 is integrally connected to a cylinder wall 11 which extends coaxially about the axis of the disc-shaft combination 1 and encloses a cylinder space 4. The cylinder space 4 is closed by a piston 3 which is sealed against the cylinder wall 11 by means of a sealing ring 7. Via bores 12 and 13 pressurized fluid can be carried to the cylinder space 4, so that the cylinder space 4 will be pressurized. As a result of this a gripping force is produced on a driving belt 10 located between the discs 1 and 2. Fluid flows into a compensation chamber 5 through a filling hole 8 in the piston 3, said filling hole 8 being provided with a plug 9 with a filter. The filling hole 8 is dimensioned such that the pressure in the compensation chamber 5 is substantially only the result of centrifugal forces on rotation of the pulley. Said pressure in the compensation chamber 5 results in a decrease of the gripping force and therefore compensates at least partially the extra pressure built up by the centrifugal effect in the cylinder space 4. The filling hole cannot become clogged because the filter of the plug 9 will stop impurities. In the long run, however, an excess of impurities will collect in the cylinder space 4, as a result of which the good operation of the cylinder-piston system may be impeded considerably. Cleaning or replacement will then be necessary.

Fig 2 illustrates an embodiment of a V-shaped pulley according to the invention. In fig 2 corresponding parts with a corresponding action are indicated by a reference number taken over from fig 1.

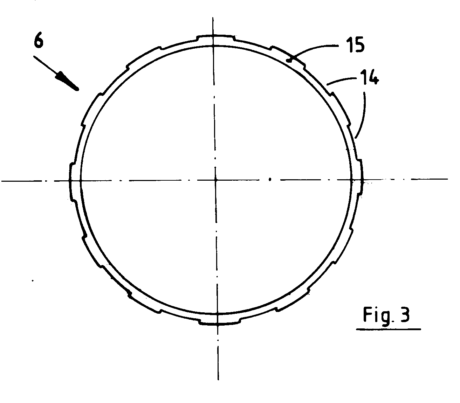

The main difference between the known infinitely variable transmission according to fig 1 and the one according to fig 2 is that in the embodiment according to the invention the costly and in the long run not quite satisfactory filling hole 8 provided with a filter plug is replaced by calibrated openings 14 between the cylinder wall 11 and the piston 3. A sealing ring 6 is provided between the piston 3 and the cylinder wall 11, whereby such calibrated openings 14 (fig 3) are present between the sealing ring 6 and the cylinder wall 11 so that under all circumstances a sufficient supply of fluid to the compensation chamber 5 is ensured, whilst on the other hand a sufficient filling of the cylinder space 4 is also ensured at all times because it is never possible that an excess of fluid flows to the compensation chamber, not even at high pressures. Such calibrated openings are moreover self-cleaning as a result of the continuous relative movement between the piston 3 and the sealing ring 6 on the one hand and the cylinder wall 11 on the other hand, so that the calibrated opening 14 forming the filling hole are constantly scraped clean.

The sealing ring 6 encloses several small calibrated openings and butts against the cylinder wall 11 over a number of radial sectors but lies clear thereof over other radial sectors.

The sealing ring may be made of several materials known by themselves, such as plastic material, cast iron and ceramic material. It will also be possible hereby to make advantageous use of a piston ring known by itself.

## Claims

Infinitely variable transmission provided with an endless transmission means (10) and at least one V-shaped pulley (1, 2), at least one pulley-half (2) of which being connected to a hydraulic cylinder-piston unit (3, 4, 11) for displacing said pulley-half (2) only in one axial direction, whereby the cylinder-piston unit (3, 4, 11) is provided with a pressure compensation chamber (5) which can be supplied with liquid from the cylinder space (4) for compensating pressure increases in the cylinder space (4) as a result of centrifugal forces, the pressure compensation chamber being provided with an exhaust towards the pressureless (atmospheric) environment, characterized in that a sealing ring (6) is provided between the piston (3) and the cylinder wall (11), which sealing ring butts against the cylinder wall (11) over a number of radial sectors, thereby enclosing together with the cylinder wall (11) calibrated inlet openings (14) for supplying liquid from the cylinder space (4) to the pressure compensation chamber (5) and for scrapping clean the calibrated inlet openings (14) during displacement of the pulley-half (2).

## Patentansprüche

Stufenlos variables Getriebe, mit einem endlosen Übersetzungsorgan (10) und wenigstens einer V-förmigen Riemenscheibe (1, 2) versehen, von der wenigstens eine Riemenscheibenhälfte (2) fest mit einer hydraulischen Zylinder-klobeneinheit (3, 4, 11) verbunden ist, um die Riemenscheibenhälfte (2) nur in einer einzigen axialen Richtung zu verstellen, wobei die Zylinder-kolbeneinheit (3, 4, 11) mit einer Druckausgleichskammer (5) versehen ist, der aus dem Zylinderraum (4) Flüssigkeit zum Ausgleich von Druckanstiegen im Zylinderraum (4) als Folge von Zentrifugalkräften zugeführt werden kann, welche Druckausgleichskammer einen Auslaß zur drucklosen (atmosphärischen) Umgebung hat, dadurch gekennzeichnet, daß sich zwischen dei kolben (3) und der Zylinderwand (11) ein Dichtungsring (6) befindet, welcher Dichtungsring über eine Reihe von Radialsektoren an der Zylinderwand (11) anliegt und somit zusammen mit der Zylinderwand (11) kalibrierte Einlaßöffnungen (14) bildet, um Flüssigkeit aus dem Zylinderraum (4) in die Druckausgleichskammer (5) zuzuführen und um die kalibrierten Einlaßöffnungen (14) während der Verlagerung der Riemenscheibenhälfte (2) sauberzukratzen.

## Revendications

Variateur continu de vitesse muni d'un moyen (10) de transmission sans fin et d'au moins une poulie en forme de V (1, 2), dont au moins une demi-poulie (2) est reliée à un organe hydraulique cylindre-piston (3, 4, 11) prévu pour ne déplacer la demi-poulie (2) que dans une seule direction axiale, ce par quoi l'organe cylindre-piston (3, 4, 11) comporte une chambre (5) de compensation de la pression qui peut recevoir du liquide provenant de l'espace cylindrique (4) pour compenser l'augmentation de pression dans l'espace cylindrique (4) résultant des forces centrifuges, la chambre de compensation de la pression présentant une évacuation en direction de l'environnement sans pression (atmosphère), variateur caractérisé par le fait qu'une bague d'étanchéité (6) est prévue entre le piston (3) et la paroi (11) du cylindre, bague d'étanchéité qui bute contre la paroi (11) du cylindre le long d'un certain nombre de secteurs radiaux, enclosant ainsi, avec la paroi (11) du cylindre, des ouvertures d'entrée calibrées (14) pour faire passer du liquide, de l'espace cylindrique (4), dans la chambre (5) de compensation de la pression et pour nettoyer, par raclage, les ouvertures d'entrée calibrées (14) au cours du déplacement de la demi-poulie (2).

Fig. 1

Fig. 2

4

Fig. 3